# EUROPEAN PATENT APPLICATION

(11) **EP 0 543 665 A1**
(43) Date of publication of application: **26.05.1993**
(21) Application number: 92310638.9
(22) Date of filing: 20.11.1992
(51) Int. Cl.: C08G 77/34

(54) **Siloxane purification**

(30) Priority: 22.11.1991 JP 334280/91
(71) Applicant: Shin-Etsu Chemical Co., Ltd., Chiyoda-ku Tokyo 100 (JP)
(72) Inventor: Tsukuno, Akihiko, Annaka-shi, Gunma-ken (JP); Watanuki, Isao, Kanra-gun, Gunma-ken (JP); Sato, Makoto, Annaka-shi, Gunma-ken (JP); Suzuki, Masaru, Usui-gun, Gunma-ken (JP); Maruyama, Masao, Usui-gun, Gunma-ken (JP); Furuya, Masaaki, Usui-gun, Gunma-ken (JP)
(74) Representative: Stoner, Gerard Patrick

(57) **Abstract**

A siloxane fluid usually contains undesirable impurities such as chlorides and low-molecular weight siloxane components. By contacting steam with the siloxane fluid and causing the undesirable impurities or components to distill out along with steam, the impurities or components can be removed from the siloxane fluid in an economically advantageous manner.

## Description

This invention generally relates to a siloxane purifying method, and more particularly, to a novel economically advantageous method for purifying a siloxane fluid for removing such impurities as chlorides, undesirable smell, or low-molecular weight siloxanes.

In general, organopolysiloxane are produced from sources in the form of dimethyl-dichlorosilane hydrolyzates or siloxane mixtures composed mainly of cyclic siloxane oligomers obtained by cracking such hydrolyzates in the presence of alkali catalysts such as potassium hydroxide. In the siloxanes, there are often left smelly hydrocarbons such as hexane and hexene. The smell of hydrocarbons is a problem when it is desired to blend siloxanes in such applications which are sensitive to smell as cosmetics including hair care and makeup compositions. It is strongly desired to readily remove the hydrocarbons in an on-line basis.

Further such sources are polymerized in the presence of an alkali catalyst such as potassium hydroxide until a desired degree of polymerization is reached. Then an acid donor such as methyltrichlorosilane is added as a neutralizing agent for deactivating the alkali catalyst. In general, low-molecular weight siloxanes are removed by suitable means such as vacuum stripping. The thus removed siloxanes are often reused in the alkali catalyzed polymerization while an excess of the neutralizing agent is always entrained into the polymerization system. Unless the neutralizing agent is removed, it would neutralize the alkali catalyst, causing many troubles in practice. It is, therefore, strongly desired from the stand-points of economy and process to readily remove these impurities in an on-line basis.

Where quaternary phosphonium hydroxides or quaternary ammonium hydroxides are used as the alkali polymerization catalysts, pyrolysis of the catalysts forms phosphorus compounds such as tri-n-butylphosphine oxide or nitrogen compounds such as trimethylamine which smell badly. Like the above-mentioned hydrocarbons, removal of these smelling compounds is also strongly desired.

Moreover, low-molecular weight siloxanes, for example, cyclic siloxanes of formula (1) shown below alone or in admixture and linear siloxanes of formula (2) shown below alone or in admixture can also detract from the desired physical properties of the overall siloxane in special electric and electronic applications where contact disturbance is a problem. It is then desired to remove low-molecular weight siloxanes from high-molecular weight siloxanes.

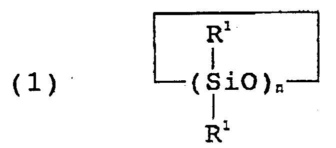

In formula (1), R¹ is a substituted or unsubstituted monovalent hydrocarbon group such as alkyl, cycloalkyl, alkenyl, aryl, alkaryl, aralkyl, halogenated alkyl, and halogenated aryl groups, and letter n is an integer of 3 to 20. The R¹ groups may be identical or different.

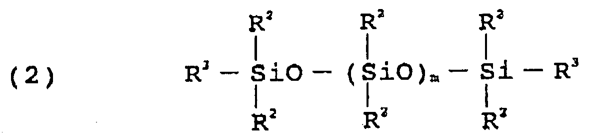

In formula (2), R² is as defined for R¹ or a monovalent organic group such as amino group-containing organic group and mercapto group-containing organic group, R³ is as defined for R² or a group such as hydroxyl, alkoxy groups and halogen atoms, and letter m is an integer of 0 to 18. The respective R² and R³ groups may be identical or different.

In the prior art there are known several siloxane purifying methods for removing impurities from siloxanes.

First, for removal of impurities such as chlorides from siloxanes and for rendering siloxanes odorless, the following techniques (A) to (C) are known.

(A) A container equipped with a mechanical stirrer is charged with siloxanes and then with more than about 10% by weight based on the siloxanes of water and the stirrer is operated for agitation and mixing for a predetermined time at a predetermined temperature. After the agitation schedule is complete, the stirrer is interrupted for a certain time, allowing liquid-liquid separation to take place between the siloxanes and water. A lower alcohol such as isopropyl alcohol may be added at this point to promote separation. Thereafter, the aqueous layer is separated off. The desired siloxanes are purified by repeating this procedure at least once.

This prior purification technique (A), however, uses a so large amount of water that it is quite difficult in practice to complete separation between the aqueous layer and the siloxanes, eventually resulting in a reduced yield of siloxanes due to incomplete separation. In addition, since a large amount of water is used, the load of waste water disposal is increased, which is disadvantageous from the environmental aspect. Since the throughput is small, a plurality of batches are generally required, resulting in a lowering of productivity. A further problem is that separation of water from siloxanes takes a long time. In most cases, more than 1 hour is needed until a desired level of separation is reached, though the separation time depends on the properties of siloxanes, scale or the like. It is difficult in practice to accomplish more complete separation without resorting to other water removal means as by vacuum stripping.

Therefore, prior art purification technique (A) is economically disadvantageous from the aspects of process, production and environment.

(B) A container is charged with siloxanes and then with several percents by weight based on the siloxanes of an adsorbent such as char coal and the contents are agitated and mixed for a predetermined time at a predetermined temperature. Thereafter, the adsorbent is separated and removed from the siloxanes. Alternatively, a similar treatment is continuously carried out using a fixed bed. See Japanese Patent Application Kokai (JP - A) No. 19237/1991.

This prior art purification technique (B), however, suffers from the problems that the filtration step intended for removal of the adsorbent imposes an increased load, the maintenance load is increased due to a loss of the adsorbent capacity with time, and separation of the adsorbent from siloxanes is accompanied by an increased pressure loss particularly when the siloxane fluid has a high viscosity, which results in a low processing rate. Therefore, prior art purification technique (B) is also disadvantageous from the aspects of production and economy.

(C) A container charged with siloxanes is evacuated by means of a vacuum pump, and heated if necessary. Vacuum distillation is performed at a predetermined temperature for a predetermined time.

This prior art purification technique (C), however, suffers from the problem that it takes a long time to remove a minor amount of smelly impurities. More particularly, although the amount of impurities which give off an offensive odor is generally very small, removal of such smelly impurities requires a large quantity of energy, resulting in an increased distillation load and a substantial loss of siloxanes. Continued vacuum distillation over a long time causes oxidation, decomposition or degradation of siloxanes, resulting in a loss of quality. Therefore, siloxane purification by prior art technique (C) is quite disadvantageous from the aspects of economy and quality.

On the other hand, the following techniques (D) and (E) are known for removal of low-molecular weight siloxanes from siloxane fluid.

(D) A container equipped with a mechanical stirrer is charged with siloxanes and then with a predetermined amount of a solvent (such as acetone and lower alcohols) and the stirrer is operated for agitation and mixing for a predetermined time at a predetermined temperature. After the agitation schedule is complete, the stirrer is interrupted for a certain time, allowing liquid-liquid separation to take place between the siloxanes and the solvent. Thereafter, the solvent layer is separated off. The desired siloxanes are purified by repeating this procedure at least once.

This prior art purification technique (D), however, uses a large amount of solvent, which not only reduces the yield of siloxanes, but is also undesirable from the working aspect. Since the throughput is small, a plurality of batches are generally required, resulting in a lowering of productivity. A further problem is that separation of the solvent from siloxanes takes a long time. In moat cases, more than 1 hour is needed until a desired level of separation is reached, though the separation time depends on the properties of siloxanes, scale or the like. It is difficult in practice to accomplish more complete separation without resorting to other solvent removal means as by vacuum stripping. In addition, since a large amount of solvent is used, the load of solvent disposal is increased, which is disadvantageous in economy.

Therefore, prior art purification technique (D) is economically disadvantageous from the aspects of process, production and environment.

(E) A container charged with siloxanes is evacuated by means of a vacuum pump, and heated if necessary. Vacuum distillation is performed at a predetermined temperature for a predetermined time.

This prior art purification technique (E), however, suffers from the problem that it takes a long time to reduce the amount of low-molecular weight siloxanes to below a desired level. This requires a large quantity of energy, resulting in an increased distillation load and a substantial loss of siloxanes. Continued vacuum distillation over a long time causes oxidation, decomposition or degradation of siloxanes, resulting in a loss of quality. Therefore, prior art technique (E) for removing low-molecular weight siloxanes for purifying siloxane fluid is quite disadvantageous from the aspects of economy and quality.

Therefore, it is desired to provide a siloxane purifying method capable of removing substantially all undesirable impurities or components from siloxane fluid in a simple, efficient, economic and secure manner; thereby purifying and rendering smell-free the siloxane fluid. The undesirable impurities include chlorides such as ethylene chlorohydrin, hydrochloric acid and methyltrichlorosilane, acids such as phosphoric acid and carboxylic acids, hydrocarbons such as phosphoric acid and carboxylic acids, hydrocarbons such as hexane and hexene, phosphorus compounds such as tri-n-butylphosphine oxide and tricresyl phosphate, and nitrogen compounds such as trimethylamine, triethylamine and tripropylamine, and the undesirable components include low-molecular weight siloxanes as represented by formulae (1) and (2).

The inventors have found that by contacting steam with a siloxane fluid containing undesirable impurities or low-molecular weight siloxane components, and causing the impurities or components to distill out along with steam, the impurities or components can be separated from the siloxane fluid. Such impurities as chlorides can be removed from siloxanes so that the siloxanes become free of smell, or low-molecular weight siloxane components can be removed from high-molecular weight siloxane components without complicity in process. Thus siloxanes are purified in an economically advantageous manner .

It is well known in the prior art that in general, impurities can be removed by steam distillation. This conventional technique has been applied to fluids other than siloxanes. Insofar as the inventors know, none of the literature and patents describe the application of steam distillation to siloxanes for the purpose of removing undesirable impurities or components as mentioned above from the siloxanes. Also, no teaching is found as to the method for removal of undesirable impurities or components which adds to a minimum installation load and can be readily incorporated in the existing siloxane process as proposed herein. Establishment of the siloxane purification technique of the present invention is of great significance to the development of a commercially acceptable overall siloxane manufacturing process.

The present invention provides a siloxane purifying method comprising the steps of contacting steam with a siloxane fluid containing impurities, and causing the impurities to distill out along with steam, thereby separating the impurities from the siloxane fluid.

The initial siloxane fluid to be purified may be any siloxane fluid which does not undergo degradation in physical properties upon contact with steam or water: Included are, for example, cyclic siloxanes of formula (3) and linear siloxanes of formula (4), both shown below, alone and mixtures thereof.

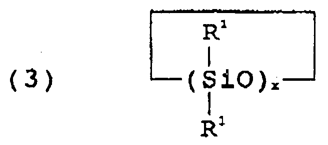

In formula (3), R¹ is a substituted or unsubstituted monovalent hydrocarbon group having 1 to 8 carbon atoms such as alkyl, cycloalkyl, alkenyl, aryl, alkaryl, aralkyl, halogenated alkyl, and halogenated aryl groups, and letter x is an integer of at least 3, preferably 3 to 20. The R¹ groups may be identical or different.

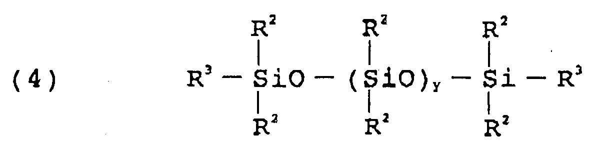

In formula (4), R² is as defined for R¹ or a monovalent organic group such as amino group-containing organic group and mercapto group-containing organic group, R³ is as defined for R² or a group such as hydroxyl, alkoxy groups having 1 to 8 carbon atoms and halogen atoms, and letter y is 0 or a positive integer, preferably 0 to 300, more preferably 0 to 18. The respective R² and R³ groups may be identical or different.

According to the present invention, the siloxane fluid is brought in contact with steam. Contact with steam can be accomplished by introducing steam into the siloxane fluid at a temperature of at least 95 °C , or by adding water to the siloxane fluid and heating the mixture with stirring, thereby generating steam.

The steam contact step is further described. First a siloxane fluid is admitted into a container, preferably a container which is equipped with a mechanical stirrer and can be evacuated to vacuum. The siloxane fluid is maintained at an appropriate temperature and pressure before steam or water is introduced into the siloxane fluid. As steam is distilled out, the impurities are entrained with the steam and thus effectively removed from the siloxane fluid.

The temperature, pressure and amount of steam are not fixedly determined as they depend on the desired level of impurity removal. More particularly the temperature is determined relative to the pressure, although the temperature may range from about 50 to about 300°C, preferably about 100 to about 300 °C , the pressure may range from about 1 to about 760 mmHg, preferably about 1 to about 300 mmHg, and the amount of steam may range from about 0.1 to about 20% by weight/hour, preferably about 1 to about 10% by weight/hour based on the weight of the siloxane fluid. Preferably the temperature and pressure are adjusted so as to permit the admitted steam or water to evaporate. If the pressure is 760 mmHg, for example, the temperature is preferably 100 °C or higher. For an increased impurity removal rate, the temperature is increased and the pressure is reduced, that is, steam distillation under vacuum is preferred.

The amount of steam or water introduced into the siloxane fluid is generally in the range of 0.1 to 10% by weight/hour based on the weight of the siloxane fluid. A larger amount within this range is preferred for an increased impurity removal rate.

By this steam contact process, any impurities including chlorides, acids, hydrocarbons, phosphorus compounds and nitrogen compounds as previously mentioned will distill out along with steam. At the same time, those cyclic siloxanes of formula (3) wherein x is 3 to 20, that is, low-molecular weight cyclic siloxanes of formula (1) and those linear siloxanes of formula (4) wherein y is 0 to 18, that is, low-molecular weight siloxanes of formula (2), if any, will distill out along with steam.

When it is desired to remove only impurities other than low-molecular weight siloxanes, preferably the low-molecular weight siloxanes which distill out along with steam (or water) and impurities are separated from the impurities and fed back to the system for preventing a lowering of the yield by connecting a water-cooled condenser and a return line to the distillation line. On the other hand, when it is desired to remove low-molecular weight siloxanes from high-molecular weight siloxanes, the distillate is entirely removed and no part thereof need be fed back to the system.

In the practice of contact with steam, it is recommended to admit an inert gas such as nitrogen gas concurrent with steam for such purposes of preventing degradation in physical properties of siloxanes by oxidation, insuring safety through maintenance of an inert atmosphere in the system, and increasing the surface area available for evaporation for increasing efficiency.

After contact with steam, a minor amount of water which is usually left in the system is preferably removed from the system by conventional dewatering techniques such as vacuum drying. Finally there is obtained a desirably purified siloxane fluid.

The present invention has the following benefits associated with purification of siloxane fluid. (1) As compared with the prior art conventional techniques such as water washing, adsorption and vacuum distillation used for removing impurities such as chlorides from a siloxane fluid and/or rendering a siloxane fluid smell-free, the present invention can reduce the siloxane loss, installation load, waste disposal load, process load, and quality lowering. Purification of siloxane fluid is achieved in an economically advantageous manner. (2) As compared with the prior art conventional techniques such as solvent extraction and vacuum distillation used for removing low-molecular weight siloxanes from a siloxane fluid, the present invention can reduce the installation load, waste disposal load, and process load and prevent coloring, gelation and smelling. Purification of siloxane fluid is advantageously achieved from the economic and quality aspects.

Examples of the present invention are given below by way of illustration and not by way of limitation.

### Example 1

A reactor equipped with a mechanical stirrer and connected to a vacuum pump was charged with 1800 kg of octamethyltetracyclosiloxane and 204 kg of a methylpolysiloxane (CH₃)₃SiO((CH₃)₂SiO)₁₁Si(CH₃)₃ and heated to an interior temperature of 145 to 155 °C . To the siloxane mixture was added 50 ppm of potassium hydroxide. Polymerization was effected at a temperature of 145 to 155 °C for 6 hours. To the resulting polysiloxane, ethylene chlorohydrin was added as a neutralizing agent in an amount of three times the neutralization equivalent of the potassium hydroxide for effecting neutralization reaction. The thus obtained polysiloxane had a viscosity of 202 centistokes (cs) at 25 °C and a heating loss of 13.7% (105 °C , 3 hours) and smelt of ethylene chlorohydrin and esters. Its ethylene chlorohydrin content was 140 ppm.

Next, the reactor was adjusted to an interior temperature of 110 to 120 °C and steam was supplied into the reactor under a pressure of 2 kg/cm²·G at a rate of 3% by weight per hour based on the polysiloxane for one hour. As steam was supplied, cyclic polysiloxanes primarily composed of octamethyltetracyclosiloxane, steam and ethylene chlorohydrin distilled out of the reactor. They were condensed in a water-cooled condenser connected to the reactor at its top and then collected in a simple receiver where liquid-liquid separation was effected. Only the siloxanes were fed back to the reactor through a return line while the remaining fluid was discharged outside the reactor.

After a predetermined amount of steam had been supplied, the reactor was adjusted to a interior temperature of 110 to 120 °C and nitrogen gas was admitted into the polysiloxane in the reactor at a flow rate of 2 Nm³/hour for 30 minutes for removing the dissolved water from the system. The resulting polysiloxane had a viscosity of 204 cs at 25 °C and a heating loss of 13.6% (105 °C , 3 hours). It was odorless and had an ethylene chlorohydrin content of less than 1 ppm.

### Example 2

Using the same reactor and reactants as used in example 1, the reactor was charged with the reactants and adjusted to an interior temperature of 105 to 115 °C . To the siloxane mixture was added 300 ppm of quaternary phosphonium hydroxide (n-C₄H₉)₄POH. Polymerization was effected at a temperature of 105 to 115 °C for 2 hours. The reactor interior temperature was then raised to 150 to 160 °C and the contents were heat treated at the temperature for 4 hours for deactivating the catalyst. The resulting polysiloxane had a viscosity of 207 cs at 25 °C and a heating loss of 12.9% (105 °C , 3 hours) and smelt of phosphorus compounds such as tri-n-butylphosphine oxide. Its phosphorus content was 20 ppm.

Next, a steam supply step was carried out as in Example 1 except that steam was supplied under a pressure of 2 kg/cm²·G at a rate of 1% by weight per hour based on the polysiloxane for 2 hours while the reactor interior was at a temperature of 150 to 160 °C and a pressure of 10 to 20 mmHg, and a dewatering step followed as in Example 1. The resulting polysiloxane had a viscosity of 215 cs at 25 °C and a heating loss of 12.0% (105 °C , 3 hours). It was odorless and had a phosphorus content of less than 0.5 ppm.

### Example 3

Using the same reactor and reactants as used in example 1, the reactor was charged with the reactants and adjusted to an interior temperature of 90 to 100 °C . To the siloxane mixture was added 100 ppm of quaternary ammonium hydroxide (CH₃)₄NOH. Polymerization was effected at a temperature of 90 to 100 °C for 2 hours. The reactor interior temperature was then raised to 130 to 140 °C and the contents were heat treated at the temperature for 4 hours for deactivating the catalyst. The resulting polysiloxane had a viscosity of 215 cs at 25 °C and a heating loss of 13.0% (105 °C, 3 hours) and smelt of amine compounds such as trimethylamine. Its nitrogen content was 2 ppm.

Next, a steam supply step was carried out as in Example 1 except that steam was supplied under a pressure of 2 kg/cm²·G at a rate of 2% by weight per hour based on the polysiloxane for 1 hour while the reactor interior was at a temperature of 120 to 130 °C , and a dewatering step followed as in Example 1. The resulting polysiloxane had a viscosity of 220 cs at 25 °C and a heating loss of 12.5% (105 °C , 3 hours). It was odorless and had a nitrogen content of less than 1 ppm.

### Example 4

A reactor as used in Example 1 was charged with 1000 kg of a dimethyldichlorosilane hydrolyzate (known in the art as "Hydrolyzate") and 200 kg of a hexamethyldisiloxane (CH₃)₃SiOSi(CH₃)₃. To the siloxane mixture was added a 98% sulfuric acid solution in an amount providing 5% by weight of H₂SO₄. Polymerization was effected at a temperature of 20 to 30 °C for 6 hours. The resulting polysiloxane was washed with water to separate the sulfuric acid from the siloxane and then dried. The resulting polysiloxane had a viscosity of 8.4 cs at 25 °C and a heating loss of 24.6% (105 °C , 3 hours) and smelt of hydrocarbons. Its hexane and hexene contents were 500 ppm and 70 ppm, respectively.

Next, a steam supply step was carried out as in example 1 except that steam was supplied under a pressure of 2 kg/cm²·G at a rate of 3% by weight per hour based on the polysiloxane for 1 hour while the reactor interior was at a temperature of 110 to 120 °C , and a dewatering step followed as in example 1. The resulting polysiloxane had a viscosity of 9.0 cs at 25 °C and a heating loss of 24.0% (105 °C , 3 hours). It was odorless and its hexane and hexene contents were both less than 10 ppm.

### Example 5

Using the same reactor, reactants and catalyst as in Example 1, polymerization was carried out in the same manner as in Example 1. To the resulting polysiloxane, formic acid as a neutralizing agent was added in an amount of three times the neutralization equivalent to the amount of KOH used, effecting neutralization reaction. The resulting polysiloxane had a viscosity of 204 cs at 25 °C and a heating loss of 13.6% (105 °C , 3 hours) and smelt of acid. Its formic acid content was 5 ppm.

Next, a steam supply step was carried out as in Example 1 except that steam was supplied under a pressure of 2 kg/cm²·G at a rate of 3% by weight per hour based on the polysiloxane for 1 hour while the reactor interior was at a temperature of 110 to 120 °C , and a dewatering step followed as in Example 1. The resulting polysiloxane had a viscosity of 210 cs at 25 °C and a heating loss of 13.4% (105 °C , 3 hours). It was odorless and had a formic acid content of less than 1 ppm.

### Example 6

A reactor as used in example 1 was charged with 1800 kg of octamethyltetracyclosiloxane and 19 kg of a tetramethyldivinyldisiloxane (CH₂=CH)(CH₃)₂SiOSi(CH₃)₂(CH=CH₂). The reactor interior was adjusted to a temperature of 120 to 130 °C. To the siloxane mixture was added 50 ppm of KOH. Polymerization was effected at a temperature of 120 to 130 °C for 8 hours. To the resulting polysiloxane, ethylene chlorohydrin as a neutralizing agent was added in an amount of three times the neutralization equivalent to the amount of KOH used, effecting neutralization reaction. The reactor interior was then adjusted to a temperature of 195 to 205 °C and a pressure of 10 to 20 mmHg.

Next, steam was supplied into the reactor under a pressure of 2 kg/cm²·G at a rate of 1% by weight per hour based on the polysiloxane for one hour. As steam was supplied, cyclic polysiloxanes primarily composed of octamethyltetracyclosiloxane, steam and excess ethylene chlorohydrin distilled out of the reactor. They were condensed in a water-cooled condenser connected to the reactor at its top and then discharged out of the reactor. The resulting polysiloxane had a viscosity of 1200 cs at 25°C and its contents of cyclic polysiloxanes represented by the general formula: [(CH₃)₂SiO]ₙ wherein n = 3 to 20 are reported in Table 1.

### Comparative Example 1

Using the same reactor and reactors as used In Example 6, the procedure of example 6 was followed until the neutralization step. The reactor interior was then adjusted to temperature of 195 to 205 °C and a pressure of 10 to 20 mmHg. Next, nitrogen gas was supplied into the reactor under a pressure of 2 kg/cm²·G at a rate of 2 Nm³/hour for one hour. The distillates were treated as in example 6. The resulting polysiloxane had a viscosity of 1180 cs at 25 °C and its contents of cyclic polysiloxanes are reported in Table 1.

**Table 1**

| Low-molecular weight cyclic siloxane content (ppm) | | |
|---|---|---|
| Number of Si atoms in low-molecular weight cyclic siloxane (n) | Example 6 | Comparative Example 1 |
| 3 | 10 > | 10 > |
| 4 | 10 > | 10 > |
| 5 | 10 > | 10 |
| 6 | 10 > | 100 |
| 7 | 10 > | 320 |
| 8 | 10 > | 410 |
| 9 | 10 > | 460 |
| 10 | 10 > | 500 |
| 11 | 10 > | 500 |
| 12 | 20 | 560 |
| 13 | 100 | 670 |
| 14 | 270 | 790 |
| 15 | 490 | 890 |

### Example 7

Using the same reactor and reactant as used in Example 4, the procedure of Example 4 was followed until the dewatering step. The reactor interior was then adjusted to a temperature of lower than 100°C and 5% by weight based on the polysiloxane of pure water was added. With stirring, the reactor was heated to an interior temperature of 130 °C . As a result of heating, steam generated and cyclic polysiloxanes primarily composed of octamethyltetracyclosiloxane and hydrocarbons distilled out of the reactor together with steam. They were condensed in a water-cooled condenser connected to the reactor at its top. Only the siloxanes were fed back to the reactor through a return line while the remaining fluid was discharged outside the reactor. The resulting polysiloxane had a viscosity of 9.0 cs at 25 °C and a heating logg of 24.0% (105 °C , 3 hours). It was odorless and its hexane and hexene contents were both less than 10 ppm.

Although some preferred embodiments have been described, many modifications and variations may be made thereto in the light of the above teachings. It is therefore to be understood that within the scope of the appended claims, the invention may be practiced otherwise than as specifically described.

## Claims

1. A siloxane purifying method comprising the steps of
contacting steam with a siloxane fluid contacting impurities, and
causing the impurities to distil out along with steam, thereby separating the impurities from the siloxane fluid.

2. A method according to claim 1 wherein the siloxane fluid contains cyclic siloxanes of formula (3) 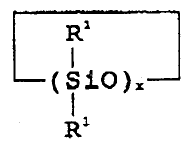 and/or linear siloxanes of formula (4) 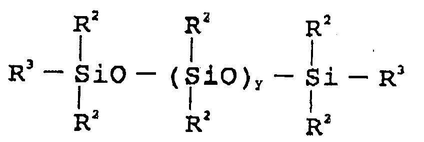 wherein R¹ is a substituted or unsubstituted monovalent hydrocarbon group having 1 to 8 carbon atoms such as alkyl, cycloalkyl, alkenyl, aryl, alkaryl, aralkyl, halogenated alkyl, and halogenated aryl groups, and letter x is an integer of at least 3, preferably 3 to 20,
R² is as defined for R¹ or is a monovalent organic group such as amino group-containing organic group and mercapto group-containing organic group, and
R³ is as defined for R² or is a group such as hydroxyl, alkoxy groups having 1 to 8 carbon atoms and halogen atoms, and letter y is 0 or a positive integer, preferably 0 to 18,
and wherein R² and R³ may be the same, or different.

3. A method according to claim 1 or claim 2 wherein the siloxane fluid is brought in contact with steam by introducing steam into the siloxane fluid at a suitable temperature or by adding water to the siloxane fluid and heating the mixture to generate steam.

4. A method according to claim 3 wherein the temperature is in the range 50 to 300°C and the pressure is in the range 1 to 760 mmHg.

5. A method according to any preceding claim wherein steam distillation is carried out under vacuum.

6. A method according to claim 3 wherein the amount of steam or water introduced into the siloxane fluid is in the range of 0.1 to 10% by weight/hour based on the weight of the siloxane fluid.

7. A method according to claim 2 and any claim dependent thereon wherein impurities and low-molecular weight siloxanes of formula (3) wherein x is 3 to 20 and/or of formula (4) wherein y is 0 to 18 are distilled out of the siloxane fluid, and a further step of returning the low-molecular weight siloxanes to the siloxane fluid is included.

8. A method according to any preceding claim wherein an inert gas is introduced together with the steam.

9. A method according to any preceding claim which further includes a step of vacuum drying the siloxane fluid.
